# EUROPÄISCHE PATENTSCHRIFT

(11) **EP 1 074 085 B1**
(45) Veröffentlichungstag und Bekanntmachung des Hinweises auf die Patenterteilung: **07.04.2004**
(21) Anmeldenummer: 99904707.9
(22) Anmeldetag: 15.01.1999
(51) Int. Cl.: H02K 15/02, H02K 1/26, H02K 1/16

(54) **VERFAHREN ZUM HERSTELLEN EINES LÄUFERS ODER STÄNDERS EINER ELEKTRISCHEN MASCHINE AUS BLECHZUSCHNITTEN**
METHOD FOR PRODUCING A ROTOR OR STATOR OF AN ELECTRICAL MACHINE FROM SHEET METAL CUTTINGS
PROCEDE DE PRODUCTION D'UN INDUIT ET D'UN STATOR D'UNE MACHINE ELECTRIQUE A PARTIR DE PIECES DECOUPEES DANS UNE TOLE

(30) Priorität: 23.04.1998 DE 19818198
(43) Veröffentlichungstag der Anmeldung: 07.02.2001
(73) Patentinhaber: ROBERT BOSCH GMBH, 70442 Stuttgart (DE)
(72) Erfinder: BERNAUER, Christof, D-76596 Forbach (DE); HENSCHEL, Matthias, D-77836 Rheinmünster (DE)
(86) Internationale Anmeldenummer: PCT/DE1999/000055
(87) Internationale Veröffentlichungsnummer: WO 1999/056379

(56) Entgegenhaltungen:
- EP-A- 0 111 193
- PATENT ABSTRACTS OF JAPAN vol. 009, no. 266 (E-352), 23. Oktober 1985 & JP 60 113632 A (SHIBAURA SEISAKUSHO:KK), 20. Juni 1985
- PATENT ABSTRACTS OF JAPAN vol. 009, no. 245 (M-418), 2. Oktober 1985 & JP 60 099437 A (MATSUSHITA DENKI SANGYO KK), 3. Juni 1985
- PATENT ABSTRACTS OF JAPAN vol. 009, no. 245 (M-418), 2. Oktober 1985 & JP 60 099438 A (MATSUSHITA DENKI SANGYO KK), 3. Juni 1985
- PATENT ABSTRACTS OF JAPAN vol. 005, no. 181 (E-083), 20. November 1981 & JP 56 107764 A (TOSHIBA CORP), 26. August 1981
- PATENT ABSTRACTS OF JAPAN vol. 011, no. 017 (E-471), 17. Januar 1987 & JP 61 189143 A (MATSUSHITA ELECTRIC IND CO LTD), 22. August 1986
- PATENT ABSTRACTS OF JAPAN vol. 098, no. 001, 30. Januar 1998 & JP 09 254287 A (NISSAN MOTOR CO LTD), 30. September 1997

## Beschreibung

### Stand der Technik

Die Erfindung geht aus von einem Verfahren nach der Gattung des Patentanspruchs 1.

Es ist schon ein solches Verfahren zur Herstellung eines Läufers einer elektrischen Maschine bekannt, bei dem die mit einem Stempel ausgestanzten Blechzuschnitte punktsymmetrisch ausgebildet sind (DE 32 46 356 A1). Die Blechzuschnitte sind im Läuferblechpaket, soweit dies die geometrische Ausbildung der Zuschnitte zuläßt, per Zufallsverteilung oder gegenüber dem nächsten Blechzuschnitt in Umfangsrichtung um einen bestimmten Winkel verdreht angeordnet. Hierdurch soll sich die durch den Walzvorgang der Bleche erzeugte magnetische Anisotropie weitgehend ausgleichen. Bei unsymmetrischen Blechzuschnitten versagt jedoch dieses Verfahren, da die Nichtverdrehbarkeit zu einer Gleichausrichtung der magnetischen Vorzugsrichtung aller Blechzuschnitte führt.

### Vorteile der Erfindung

Das erfindungsgemäße Verfahren mit den Verfahrensschritten nach Patentanspruch 1 hat demgegenüber den Vorteil, daß unter Inkaufnahme erhöhter Werkzeug-Herstellkosten wenigstens zwei Chargen von Blechzuschnitten unterschiedlicher magnetischer Vorzugsrichtung erzeugt werden, bei deren deckungsgleicher Stapelung in wechselweiser Folge ein weitgehendes Aufheben der magnetischen Anisotropie erzielt werden kann. Da die beiden Chargen der Blechzuschnitte vorzugsweise in Stanzwerkzeugen mit zwei Stempeln ausgeschnitten werden (Mehrfachschnitt), kann bezüglich des verwendeten Walzblechstreifens durch günstige Stempelanordnung eine hohe Werkstoffausnützung erzielt werden.

### Zeichnung

Ein erfindungsgemäßes Verfahrensbeispiel ist in der nachfolgenden Beschreibung anhand der einen Blechbandabschnitt mit zwei Blechzuschnitten für einen Läufer einer elektrischen Maschine darstellenden Zeichnung näher erläutert.

### Beschreibung des Verfahrensbeispiels

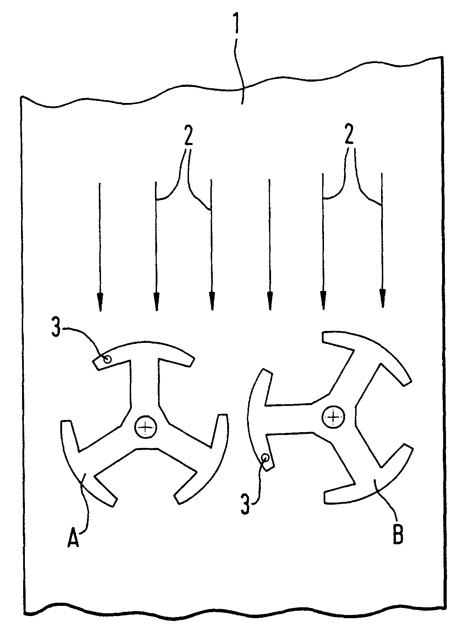

Ein in der Figur der Zeichnung dargestellter Blechbandabschnitt 1 weist aufgrund von im Zuge seiner Herstellung liegenden Walzvorgängen eine durch Pfeile 2 verdeutlichte magnetische Vorzugsrichtung auf. Mit einem nicht dargestellten Stanzwerkzeug werden aus dem Blechband 1 mittels zweier Stempel in Längsrichtung des Blechbandes aufeinanderfolgend eine Vielzahl von Blechzuschnitten A und B für einen Läufer einer elektrischen Maschine ausgeschnitten. Die einteiligen Blechzuschnitte A und B sind deckungsgleich ausgebildet. Sie sind jedoch wegen einer Formabweichung 3 unsymmetrisch ausgebildet. Würde man ein Läuferblechpaket lediglich aus den Blechzuschnitten A oder aus den Blechzuschnitten B schichten, so würde im jeweiligen Blechpaket die magnetische Vorzugsrichtung 2 in allen Blechzuschnitten gleichgerichtet verlaufen. Dies hätte ein nachteiliges Leistungs- und Geräuschverhalten der das Blechpaket aufweisenden Maschine zur Folge.

Erfindungsgemäß ist daher der Blechzuschnitt B im Bezug auf den Blechzuschnitt A um 90° entgegen dem Uhrzeigersinn verdreht angeordnet. Es werden daher mit dem Stanzwerkzeug zwei Chargen von Läuferblechzuschnitten A und B erzeugt, bei deren bezüglich der Formabweichung 3 deckungsgleicher Anordnung die magnetische Vorzugsrichtung 2 um 90° verdreht zueinander verläuft. Bei einem Läufer, der wechselweise aus den Blechzuschnitten A und B oder aus Gruppen von Blechzuschnitten A und B geschichtet ist, wird somit die magnetische Anisotropie weitgehend ausgeglichen.

Die Figur der Zeichnung gibt das erfindungsgemäße Verfahrensbeispiel lediglich schematisiert wieder. Bei einer praxisgerechten Anwendung sind die zur Herstellung der Läuferblechzuschnitte A und B erforderlichen Werkzeugstempel derart angeordnet, daß das Blechband 1 mit geringem Abfallanteil ausgenützt wird. Dabei ist die Breite des Blechbandes 1 ebenfalls auf geringen Blechabfall abgestimmt.

Abweichend vom Verfahrensbeispiel können außerdem, sofern dies die konstruktive Gestaltung des Läufers der elektrischen Maschine zuläßt, die Blechzuschnitte A und B bezüglich der magnetischen Vorzugsrichtung zwischen 10 und 170° gegeneinander verdreht sein. Ferner kann das erfindungsgemäße Verfahren auch Anwendung finden beim Herstellen von aus einteiligen, deckungsgleichen Blechzuschnitten geschichteten Ständern elektrischer Maschinen.

## Patentansprüche

1. Verfahren zum Herstellen eines Läufers oder Ständers einer elektrischer Maschine aus einteiligen, deckungsgleichen Blechzuschnitten (A, B), die aus Walzblech (1) mit magnetischer Vorzugsrichtung (2) ausgeschnitten und zu einem Läufer- oder Ständerblechpaket geschichtet werden, **dadurch gekennzeichnet,**
**daß** bei unsymmetrischen Blechzuschnitten (A, B) diese bezüglich der magnetischen Vorzugsrichtung (2) verdreht zueinander aus dem Walzblech (1) ausgeschnitten werden.

2. Verfahren nach Anspruch 1, **dadurch gekennzeichnet, daß** die Blechzuschnitte (A, B) bezüglich der magnetischen Vorzugsrichtung (2) zwischen 10 und 170°, vorzugsweise um 90° gegeneinander verdreht sind.

## Revendications

1. Procédé permettant de produire un rotor ou un stator d'une machine électrique à partir de sections de tôle (A, B) uniques, de surfaces de couverture égales, découpées dans une tôle laminée (1) avec un sens magnétique préférentiel (2) et empilées pour former un paquet de tôle pour rotor ou stator
**caractérisé en ce que**
pour des sections de tôle (A, B) asymétriques, celles-ci sont découpées dans la tôle laminée (1) en présentant entre elles un décalage de positionnement par rapport au sens magnétique préférentiel (2).

2. Procédé selon la revendication 1,
**caractérisé en ce que**
les sections de tôle (A, B) présentent un décalage de positionnement l'une par rapport à l'autre compris entre 10 et 170°, de préférence de 90°, par rapport au sens magnétique préférentiel (2).

## Claims

1. Method of producing a rotor or stator of an electrical machine from one-piece, congruent sheet-metal blanks (A, B) which are cut out of rolled sheet (1) having a preferred direction (2) of magnetization and are stacked to form a laminated rotor or stator core, **characterized in that**, in the case of asymmetrical sheet-metal blanks (A, B), these sheet-metal blanks (A, B) are cut out of the rolled sheet (1) in such a way as to be rotated relative to one another with regard to the preferred direction (2) of magnetization.

2. Method according to Claim 1, **characterized in that** the sheet-metal blanks (A, B), with regard to the preferred direction (2) of magnetization, are rotated relative to one another by between 10 and 170°, preferably by 90°.
